## Europäisches Patentamt

## European Patent Office

## Office européen des brevets

(19)

(11) Veröffentlichungsnummer: **0 132 684**
**B1**

(12) **EUROPÄISCHE PATENTSCHRIFT**

(45) Veröffentlichungstag der Patentschrift:
**11.03.87**

(21) Anmeldenummer: **84108032.8**

(22) Anmeldetag: **09.07.84**

(51) Int. Cl.⁴: **C 08 F 2/52,** B 05 D 5/12,
C 09 D 3/78

(54) Verfahren zum Erzeugen von Glimmpolymerisat-Schichten.

(30) Priorität: **22.07.83 DE 3326377**

(43) Veröffentlichungstag der Anmeldung:
**13.02.85 Patentblatt 85/7**

(45) Bekanntmachung des Hinweises auf die Patenterteilung:
**11.03.87 Patentblatt 87/11**

(84) Benannte Vertragsstaaten:
**AT BE CH DE FR GB IT LI NL SE**

(56) Entgegenhaltungen:
**DE - A - 2 652 383**
**DE - A - 3 039 561**
**GB - A - 2 108 133**
**US - A - 4 365 587**

(73) Patentinhaber: **Siemens Aktiengesellschaft Berlin und München, Wittelsbacherplatz 2, D-8000 München 2 (DE)**

(72) Erfinder: **Kleeberg, Wolfgang, Dr., Hessenstrasse 7, D-8520 Erlangen (DE)**
Erfinder: **Rittmayer, Gerhard, Dr., Eskilstunastrasse 8, D-8520 Erlangen (DE)**
Erfinder: **Kammermaier, Johann, Dr., Ziehrerstrasse 19, D-8025 Unterhaching (DE)**
Erfinder: **Schulte, Rolf-Winfried, Georg-Krauss-Strasse 2, D-8520 Erlangen (DE)**

## Beschreibung

Die Erfindung betrifft ein Verfahren zum Erzeugen von Glimmpolymerisat-Schichten auf einem Substrat, aus monomeren Kohlenwasserstoffen und/oder Fluorkohlenstoffen mittels einer Hochfrequenz-Niederdruck-Glimmentladung.

Die Glimmpolymerisation, bei der — ausgehend von gasförmigen organischen Monomeren — durch Niederdruckplasmaanregung auf einem Substrat Polymere erzeugt werden, erlaubt die Herstellung dünner, gleichmässiger und porenfreier Schichten, insbesondere auch aus Monomeren, die anderweitig nicht polymerisierbar sind. Als besonders vorteilhaft zur Erzeugung von Niederdruckplasmen für die Glimmpolymerisation haben sich hochfrequente Entladungen erwiesen, und zwar im Radiofrequenzbereich (siehe: A.T. Bell in S. Veprek, M. Venugopalan «Plasma Chemistry III», Springer-Verlag Berlin Heidelberg, 1980, Seite 43 ff.), d.h. im Bereich zwischen 0,1 und 100 MHz (RF), und im Mikrowellenbereich (siehe: «J. Macromol. Sci.-Chem.» A14 (3), Seiten 321 bis 337, 1980), d.h. im Bereich zwischen 0,1 und 1000 GHz (MW). Dabei kann nämlich die Energie in das Plasma, d.h. in den Reaktor, in dem die Glimmpolymerisation durchgeführt wird, ohne Schwierigkeiten — über Aussenleitungen — kapazitiv oder induktiv und auch über Wellenhohlleiter, wie Resonatorkavitäten, sogenannte «slow wave structures» u.s.w., eingekoppelt werden, wodurch eine reaktive Wechselwirkung zwischen den elektrisch leitenden Teilen und dem Plasma unterbunden wird.

Einen interessanten Aspekt bei der Glimmpolymerisation stellt die Herstellung solcher Schichten dar, bei denen von Kohlenwasserstoffen (CH) und Fluorkohlenstoffen bzw. Fluorcarbonen (CF) ausgegangen wird. Dabei sollten sich nämlich aus den eingesetzten organischen Monomeren, die ein breites Spektrum polymerisationsfreundlicher Verbindungen umfassen, Glimmpolymerisate mit in einem weiten Bereich spezifizierbaren Eigenschaften herstellen lassen, beispielsweise — in qualitativ und quantitativ guter Ausbeute — dünne Schichten auf CH- und/oder CF-Basis für verlustarme Dielektrika, oberflächenenergiearme und damit flüssigkeitsabweisende Überzüge, empfindliche Resistschichten für Trockenstrukturierungsprozesse in der Röntgen- und Elektronenstrahllithographie, Dünnschichtmembranen für elektromedizinische Anwendungen und Elektrete für verschiedene Anwendungszwecke.

Bei der Anwendung hochfrequenter RF- und MW-Glimmentladungen entstehen aus CH-, CF- und CH-CF-Monomeren in der Regel aber Polymerisate mit einem im Vergleich zu den Monomeren niedrigeren H- und/oder F-Anteil. Dies ist darauf zurückzuführen, dass in den Plasmen aus den Monomermolekülen durch Zusammenstösse mit geladenen Partikeln, insbesondere Elektronen, H- und F-Atome sowie H- und F-reiche Spezies abgespalten und mit dem Gasstrom (der monomeren Komponente) abgeführt werden, damit aber auch der Schichtbildung entzogen werden. Dies hat zur Folge, dass die gebildeten Schichten eine im Vergleich zu den Monomeren unterstöchiometrische C/H- bzw. C/F-Zusammensetzung aufweisen. In den Schichten bilden sich dadurch primär ungesättigte Strukturen und Radikale, die sich bei Zutritt von Luftsauerstoff oxidativ umsetzen und dabei unerwünschte, undefinierte polare Strukturen ergeben. Diese Strukturen bedingen beispielsweise eine Verschlechterung der dielektrischen Eigenschaften, eine Erhöhung der Wassersorption und ein chemisch verändertes Verhalten bei der Einwirkung von Lösungsmitteln (Lyophilität).

Aufgabe der Erfindung ist es, ein Verfahren der eingangs genannten Art zum Erzeugen von Glimmpolymerisat-Schichten, bei welchem von monomeren Kohlenwasserstoffen und/oder Fluorkohlenstoffen ausgegangen wird, in der Weise auszugestalten, dass direkt vollständig mit Wasserstoff bzw. Fluor abgesättigte Glimmpolymerisate entstehen.

Dies wird erfindungsgemäss dadurch erreicht, dass die Glimmentladung im Mikrowellenbereich zwischen 0,5 und 1000 GHz durchgeführt wird und dass bei der Mikrowellenentladung die Amplitude $E_0$ der wirksamen Feldstärke im Bereich des Substrats $\leq 850$ V/cm beträgt.

Beim erfindungsgemässen Verfahren unterbleibt eine Abspaltung von H- bzw. F-Atomen aus den eingesetzten Monomeren, vielmehr entstehen aus diesen — unter Spaltung von C-C-Bindungen — vorwiegend polymerisationsfreundliche $CH_2$- bzw. $CF_2$-Spezies; dies ist, im Gegensatz dazu, bei hochfrequenten Entladungen im RF-Bereich (im allgemeinen) nicht der Fall. Beim erfindungsgemässen Verfahren wird — bei den MW-Entladungen — die Energie der in erster Linie als Stosspartikel fungierenden Elektronen offensichtlich so begrenzt, dass überwiegend C-C-Bindungen, nicht aber die festeren C-H- bzw. C-F-Bindungen der Monomeren gespalten werden. Theoretische Überlegungen bestätigen diese Annahme.

Die von einem elektrischen Wechselfeld mit sinusförmig angenommenem Zeitverlauf durch Elektroden auf das Plasma übertragbare Energie U ist, sofern die Frequenz $v$ des Feldes kleiner als die mit der freien Weglänge der Elektronen korrelierende Plasmastossfrequenz $v_p$ ist, allgemein gegeben durch:

$$U = 1/2 \cdot \frac{e^2 E^2}{m(2\pi v)^2} \; ;$$

dabei bedeutet: e die Elementarladung,
E die auf die Elektronen — an einem bestimmten Ort — wirksame elektrische Feldstärke (E ist eine Funktion des angelegten äusseren Feldes und des Ortes),
m die Masse eines Elektrons,
$v$ die Feldfrequenz.

Der zeitliche Mittelwert $U_t$ der Energie beträgt:

$$U_t = 1/4 \cdot \frac{e^2 E_0^2}{m(2\pi v)^2} \; ,$$

wobei $E_0$ die Amplitude der wirksamen Feldstärke E ist.

Die durch Elektronen — infolge von Stossvorgängen — auf das Plasma übertragbare Energie ist somit proportional zum Quadrat der reziproken Feldfrequenz. Dies bedeutet, dass — bei vergleichbaren Werten von $E_0$ — in MW-Entladungen sehr viel weniger Energie auf die Monomermoleküle übertragen wird als in RF-Entladungen. Da andererseits in MW-Plasmen die Elektronendichte um Grössenordnungen höher ist als in RF-Plasmen, stehen in MW-Plasmen erheblich mehr Elektronen mit gleichförmiger Energieverteilung zur Verfügung. Entsprechend dem erfindungsgemässen Verfahren wird nun $U_t$ — durch geeignete Wahl von $E_0$, insbesondere über die von aussen aufgeprägte Feldstärke oder, bei Anordnungen mit einer Resonatorkavität, durch eine bestimmte Lage des Substrats — nach oben so begrenzt, dass die Elektronen überwiegend nur C-C-Bindungen spalten, nicht aber die festeren C-H- und C-F-Bindungen. Erfindungsgemäss wird dazu als Obergrenze für $E_0$ der Wert 850 V/cm festgesetzt.

Beim erfindungsgemässen Verfahren werden — aufgrund der selektiven Spaltung der C-C-Bindungen — Schichten erhalten, die in chemischer Hinsicht dieselbe Zusammensetzung und dieselben Strukturmerkmale aufweisen wie die eingesetzten Monomeren. Dies ist ein wesentlicher Vorteil dieses Verfahrens, der insbesondere auch bei der Herstellung von Schichten mit Elektreteigenschaften, beispielsweise aus CH-CF-Verbindungen, wichtig ist.

Aus der DE-OS 30 39 561 ist ein Elektret bekannt, der aus einem Film aus einem plasmapolymerisierten dielektrischen Material, das eine volumetrische Raumladung hat, besteht. Dieser Film wird bei einer Frequenz zwischen 0 Hz und 30 GHz plasmapolymerisiert; die Frequenz kann dabei im Mikrowellenfrequenzbereich liegen. Als Monomere können bei der Plasmapolymerisation Hexamethyldisiloxan, Silan, Ethylen, Styrol und Tetrafluorethylen verwendet werden. Es findet sich hierbei aber kein Hinweis auf die Herstellung voll hydrierter und fluorierter Glimmpolymerisate bzw. auf das beim erfindungsgemässen Verfahren wesentliche Merkmal, die Mikrowellenentladung in der Weise durchzuführen, dass die Amplitude der wirksamen Feldstärke im Bereich des Substrats $\leq$ 850 V/cm beträgt. Es muss somit davon ausgegangen werden, dass diese wesentliche Bedingung bislang nicht erkannt worden ist. Im übrigen beschränkt sich der bisher bekanntgewordene Einsatz der Mikrowellenentladung in der Plasmachemie weitgehend auf die Initiierung von Radikalreaktionen (siehe dazu: H. Drost «Plasmachemie», Seiten 71 und 72), wozu hochenergetische Elektronen erforderlich sind.

Über die freie Weglänge der Elektronen und die Durchflussrate des Monomergases (durch die Entladeanordnung) kann die Plasmastossfrequenz $\nu_p$ beeinflusst werden und damit indirekt, wenn auch in geringem Ausmass, die Tendenz der Spaltungsvorgänge. Eine Verkürzung der freien Weglänge bzw. eine Erhöhung der Plasmastossfrequenz ergibt dabei eine vermehrte Spaltung von C-C-Bindungen, da die Elektronen dann im Mittel geringere Energien erreichen. Vorteilhaft wird beim erfindungsgemässen Verfahren deshalb die Mikrowellenentladung bei einem Druck von 0,1 bis 1 mbar durchgeführt, vorzugsweise bei einem Druck von ca. 0,5 mbar.

Beim erfindungsgemässen Verfahren wird ferner das Substrat während der Mikrowellenentladung vorteilhaft auf Temperaturen bis zu 200°C erhitzt; hierbei werden nämlich Glimmpolymerisat-Schichten mit ausgezeichneten Eigenschaften erhalten. Die Glimmentladung selbst erfolgt vorzugsweise im Mikrowellenbereich zwischen 0,5 und 100 GHz.

Als Kohlenwasserstoff-Monomere können beim erfindungsgemässen Verfahren beispielsweise folgende Verbindungen verwendet werden: Ethylen, Propen, Buten, Butadien und Cyclohexan. Vorzugsweise werden bei diesem Verfahren perfluorierte organische Verbindungen, d.h. Fluorkohlenstoffe, eingesetzt. Als monomere Fluorverbindung dient dabei insbesondere Octafluorcyclobutan $C_4F_8$ (Perfluorcyclobutan), daneben kommen aber auch andere perfluorierte Kohlenwasserstoffe in Betracht, wie Tetrafluorethylen $C_2F_4$, Perfluorpropen $C_3F_6$, Perfluorbuten $C_4F_8$ und Perfluorcyclohexan $C_6F_{12}$.

Die nach dem erfindungsgemässen Verfahren hergestellten Glimmpolymerisat-Schichten weisen nicht nur Porenfreiheit und eine gleichmässige Struktur auf, sondern sie sind darüber hinaus in der chemischen Zusammensetzung und in den physikalischen Eigenschaften stabil und den entsprechenden konventionell hergestellten Polymerisaten, wie Polyethylen (PE), Polytetrafluorethylen (PTFE), Tetrafluorethylen-Hexafluorpropen-Copolymerisat (FEP) und ähnlichen Materialien, gleichwertig. Dies ist offensichtlich darauf zurückzuführen, dass die nach dem erfindungsgemässen Verfahren hergestellten Glimmpolymerisate vollständig hydriert bzw. fluoriert sind, da im Plasma eine Abspaltung von H- und/oder F-Atomen aus den Monomeren weitestgehend vermieden wird und die hergestellten Schichten — innerhalb der analytischen Bestimmungsgrenzen — somit ein den Monomeren entsprechendes H/C- bzw. F/C-Verhältnis aufweisen.

Anhand von Ausführungsbeispielen und einer Figur soll die Erfindung noch näher erläutert werden.

In der Figur ist eine vorteilhafte Vorrichtung zur Durchführung des erfindungsgemässen Verfahrens dargestellt. Ein Reaktor 1, d.h. ein Reaktionsgefäss, ist durch eine Leitung 2 mit einem Vorratsgefäss 3 für eine monomere Kohlenwasserstoff- bzw. Fluorkohlenstoffverbindung oder für ein Monomerengemisch verbunden. In der Leitung 2 ist ein Nadelventil 4 und ein Durchflussmesser 5 für das Monomergas angeordnet. An der Leitung 2 ist ferner ein Druckmessgerät 6 vorgesehen. Falls erforderlich, kann der Reaktor — in entsprechender Weise — auch mit zwei oder mehreren Vorratsgefässen verbunden sein.

Der Reaktor 1 ist von einer Kavität 7, d.h. einem Hohlleiter bestimmter Grösse, und einem Ofen 8 umgeben; die Kavität 7 ist dabei an einen Mikrowellengenerator 9 angeschlossen. Innerhalb des Reaktors 1 sind — im Bereich des Ofens 8 — ein oder mehrere Substrate 10 angeordnet. Ein Thermoelement 11 dient zur Ermittlung der Temperatur im Bereich des Substrats 10. Der Ausgang des Reaktors 1 ist durch eine Leitung 12 mit einer Vakuumpumpe 13 verbunden. In der Leitung 12 sind ein Reduzierventil 14 und eine Kühlfalle 15 mit flüssigem Stickstoff angeordnet.

In der in der Figur dargestellten Vorrichtung wird mit einer Mikrowellenentladung mit einer Frequenz von beispielsweise 2,45 GHz aus $C_4F_8$ auf einem Substrat eine Glimmpolymerisat-Schicht hergestellt. Das Monomergas wird mit einer Durchflussrate von 13 Standardkubikzentimeter/min und einem Gasdruck von 0,5 mbar durch den Reaktor in Form eines Quarzrohres mit einem Innendurchmesser von 2,5 cm geleitet. Der um das Quarzrohr angeordnete Mikrowellenresonator speist mit einer Leistung von bis zu 200 W die Mikrowellenenergie in die mit einer Teslaspule gezündete Gasentladung ein. Das Substrat wird ausserhalb des Resonators in das Quarzrohr gelegt und zwar gasstromabwärts; es kann aber auch gasstromaufwärts, aber ebenfalls ausserhalb der Kavität, im Reaktor angeordnet werden.

Auf den in verschiedenem Abstand zum Mikrowellenresonator angeordneten Substraten werden Glimmpolymerisate abgeschieden, die einen Übergang von härteren, spröden und klaren zu weicheren weisslichen Schichten zeigen. In einem bestimmten Bereich des Reaktors, der im Plasma offenbar der zur Spaltung von C-C-Bindungen geeigneten Feldstärke entspricht, sind die Schichten klar und nicht spröde und gleichen IR-spektroskopisch konventionell hergestelltem PTFE; darüber hinaus ergeben ESCA-Untersuchungen ein F/C-Verhältnis von 2:1. Ebenso ergeben die dielektrischen Messungen bezüglich Isolationswiderstand, Permittivität und Verlustfaktor eine Gleichwertigkeit des erfindungsgemäss hergestellten Mikrowellen-Polymerisats mit konventionell hergestelltem PTFE.

**Patentansprüche**

1. Verfahren zum Erzeugen von Glimmpolymerisat-Schichten auf einem Substrat, aus monomeren Kohlenwasserstoffen und/oder Fluorkohlenstoffen mittels einer Hochfrequenz-Niederdruck-Glimmentladung, dadurch gekennzeichnet, dass die Glimmentladung im Mikrowellenbereich zwischen 0,5 und 1000 GHz durchgeführt wird und dass bei der Mikrowellenentladung die Amplitude $E_0$ der wirksamen Feldstärke im Bereich des Substrats ≤ 850 V/cm beträgt.

2. Verfahren nach Anspruch 1, dadurch gekennzeichnet, dass die Mikrowellenentladung bei einem Druck von 0,1 bis 1 mbar, vorzugsweise von etwa 0,5 mbar, durchgeführt wird.

3. Verfahren nach Anspruch 1 oder 2, dadurch gekennzeichnet, dass das Substrat während der Mikrowellenentladung auf Temperaturen bis zu 200°C erhitzt wird.

4. Verfahren nach einem der Ansprüche 1 bis 3, dadurch gekennzeichnet, dass als Monomere perfluorierte Verbindungen, insbesondere Octafluorcyclobutan, verwendet werden.

**Claims**

1. A process for the production of polymer layers on a substrate by glow discharge, from monomeric hydrocarbons and/or fluorocarbons by means of a high-frequency low-pressure glow discharge, characterised in that the glow discharge is carried out in the microwave range of between 0.5 and 1000 GHz; and that during the microwave discharge, the amplitude $E_0$ of the effective field strength in the region of the substrate is ≤ 850 V/cm.

2. A process as claimed in Claim 1, characterised in that the microwave discharge is carried out at a pressure of 0.1 to 1 mbar, preferably of about 0.5 mbar.

3. A process as claimed in Claim 1 or 2, characterised in that the substrate is heated to temperatures of up to 200°C during the microwave discharge.

4. A process as claimed in one of Claims 1 to 3, characterised in that perfluorinated compounds, particularly but not exclusively, octafluorocyclobutane, are used as monomers.

**Revendications**

1. Procédé de production de couches de polymères par décharge lumineuse sur un substrat, à partir d'hydrocarbures et/ou d'hydrocarbures fluorés monomères, au moyen d'une décharge lumineuse à haute fréquence et sous basse pression, caractérisé en ce qu'il consiste à effectuer la décharge lumineuse dans la bande des micro-ondes entre 0,5 et 1000 GHz et en ce que dans la décharge micro-ondes, l'amplitude $E_0$ de l'intensité efficace du champ dans la région du substrat est ≤ 850 V/cm.

2. Procédé suivant la revendication 1, caractérisé en ce qu'il consiste à effectuer la décharge micro-ondes sous une pression de 0,1 à 1 mbar, et de préférence, de 0,5 mbar.

3. Procédé suivant la revendication 1 ou 2, caractérisé en ce qu'il consiste à porter le substrat à des températures allant jusqu'à 200°C pendant la décharge micro-ondes.

4. Procédé suivant l'une des revendications 1 à 3, caractérisé en ce qu'il consiste à utiliser comme monomères des composés perfluorés, notamment de l'octafluorocyclobutane.